# EUROPÄISCHE PATENTSCHRIFT

(11) **EP 3 360 403 B1**
(45) Veröffentlichungstag und Bekanntmachung des Hinweises auf die Patenterteilung: **01.04.2020**
(21) Anmeldenummer: 18401012.2
(22) Anmeldetag: 30.01.2018
(51) Int. Cl.: A01C 5/06, A01C 7/20

(54) **SÄAGGREGAT FÜR EINE SÄMASCHINE**
SOWING UNIT FOR A SOWING MACHINE
APPAREIL SEMEUR POUR UN SEMOIR

(30) Priorität: 10.02.2017 DE 102017102671
(43) Veröffentlichungstag der Anmeldung: 15.08.2018
(73) Patentinhaber: Amazonen-Werke H. Dreyer GmbH & Co. KG, 49205 Hasbergen (DE)
(72) Erfinder: Mertens, Daniel, 26121 Oldenburg (DE)

(56) Entgegenhaltungen:
- DE-A1- 10 327 377
- DE-A1-102007 036 662
- US-A- 5 826 524
- US-A1- 2009 158 981

## Beschreibung

Die Erfindung betrifft ein Säaggregat für eine Sämaschine nach dem Oberbegriff des Patentanspruchs 1 und eine Sämaschine nach dem Oberbegriff des Patentanspruchs 9.

Säaggregate von Sämaschinen weisen ein Säschar zur Abgabe von Saatgut auf. Die Saatgut-Ablagetiefe des Säschars wird üblicherweise über ein oder mehrere Tiefenführungselemente eingestellt. Zum Abfangen und Einbetten des von dem Säschar abgegebenen Saatguts weisen gattungsgemäße Säaggregate eine Rolle auf.

Die Rolle ist dabei häufig aus einem verformbaren Material ausgebildet. Im Betrieb des Säaggregats muss der untere Aufstandsbereich der Rolle unterhalb des unteren Aufstandsbereichs des einen oder der mehreren Tiefenführungselemente angeordnet sein, damit das von dem Säschar abgegebene Saatgut optimal abgefangen und/oder eingebettet werden kann.

Die Anordnung des unteren Aufstandsbereichs der Rolle unterhalb des unteren Aufstandsbereichs des einen oder der mehreren Tiefenführungselemente hat zur Folge, dass die Rolle nach dem Abstellen der Sämaschine auf einen harten Boden, beispielsweise den Boden der Maschinenhalle, dauerhaft auf Druck beansprucht wird. Diese Dauerbeanspruchung führt nach einiger Zeit zu einer plastischen Verformung der Rolle, welche sich bei Entlastung der Rolle nicht zurückbildet. Derartige Konstruktionen sind beispielsweise in den Druckschriften EP 1 461 988 B1, DE 10 2007 036 662 A1, US 5 826 524 A, DE 103 27 377 A1 beschrieben.

Die Verformung beeinträchtigt die Funktion der Rolle in erheblichem Maße, sodass vor der Verwendung der Sämaschine sogar der Austausch von einer oder mehreren Rollen notwendig sein kann, um ein zufriedenstellendes Säergebnis erreichen zu können.

Die der Erfindung zugrunde liegende Aufgabe besteht somit darin, eine Möglichkeit zu schaffen, die zum Abfangen und Einbetten des von einem Säschar abgegebenen Saatguts verwendete Rolle eines Säaggregats in einer Parkposition zu entlasten.

Die Aufgabe wird gelöst durch ein Säaggregat der eingangs genannten Art, wobei das eine oder die mehreren Tiefenführungselemente und die Rolle derart relativ zueinander bewegbar sind, dass der untere Aufstandsbereich des einen oder der mehreren Tiefenführungselemente oberhalb und unterhalb des unteren Aufstandsbereichs der Rolle positionierbar ist.

Die Erfindung macht sich die Erkenntnis zunutze, dass das eine oder die mehreren Tiefenführungselemente in einer Parkposition des Säaggregats zum Schutz der Rolle genutzt werden können. Dadurch, dass der untere Aufstandsbereich des einen oder der mehreren Tiefenführungselemente unterhalb des unteren Aufstandsbereichs der Rolle positionierbar ist, kann eine Bodenberührung der Rolle beim Abstellen der Sämaschine vermieden werden. Somit ist das Säaggregat in eine Parkposition verbringbar, in welcher die Rolle nicht belastet wird. Insbesondere, wenn die Rolle elastisch verformbar ausgebildet ist, wird somit die Erzeugung einer plastischen Verformung der Rolle vermieden, welche zu einer Beschädigung und somit zu einer Funktionsbeeinträchtigung der Rolle führen würde. Insbesondere kann beim Abstellen der Sämaschine auch auf die Verwendung von Schutzklötzen verzichtet werden, welche die Rollen in der Parkposition vor einer Druckbeanspruchung schützen. Die Rolle kann beispielsweise als Fangrolle oder als Andruckrolle ausgebildet sein. Das eine oder die mehreren Tiefenführungselemente können als Tiefenführungsräder, Bandlaufwerke oder Tiefenführungskufen ausgebildet und/oder seitlich oder nachlaufend zu dem Säschar angeordnet sein. Das Säschar kann eine oder mehrere Scharscheiben aufweisen. Das Säaggregat kann mit verschiedenen Sämaschinen verwendet werden, beispielsweise mit einer Einzelkornsämaschine, einer Mulchsaatmaschine, oder einer Sämaschine, welche Keilschare aufweist. In Fahrtrichtung hinter der Rolle können Andruckelemente angeordnet sein, wobei die Andruckelemente beispielsweise zwei V-förmig zueinander angestellte Andruckrollen umfassen. Außerdem kann das Säaggregat in Fahrtrichtung vor dem einen oder den mehreren Tiefenführungselementen ein oder mehrere Sternräumer und/oder einen Klutenräumer aufweisen.

In einer besonders bevorzugten Ausführungsform des erfindungsgemäßen Säaggregats ist die Rolle an einer Rollenaufhängung befestigt, wobei die Rollenaufhängung dazu eingerichtet ist, ein Absenken des unteren Aufstandsbereichs der Rolle unter den unteren Aufstandsbereich des einen oder der mehreren Tiefenführungselemente und/oder ein Anheben des unteren Aufstandsbereichs der Rolle über den unteren Aufstandsbereich des einen oder der mehreren Tiefenführungselemente zu erlauben. Vorzugsweise weist die Rollenaufhängung mehrere gelenkig miteinander verbundene Streben auf, welche die Rolle mit einem Tragrahmen des Säaggregats verbinden und ein Verschwenken der Rolle um eine im Wesentlichen horizontal und quer zur Fahrtrichtung verlaufende Schwenkachse ermöglichen. Alternativ oder zusätzlich kann die Rollenaufhängung ein oder mehrere längenveränderliche Elemente, wie etwa Teleskopstreben oder Einstellzylinder aufweisen.

In einer vorteilhaften Weiterbildung des erfindungsgemäßen Säaggregats ist das eine oder sind die mehreren Tiefenführungselemente an einer Aufhängung befestigt, wobei die Aufhängung dazu eingerichtet ist, ein Absenken des unteren Aufstandsbereichs des einen oder der mehreren Tiefenführungselemente unter den unteren Aufstandsbereich der Rolle und/oder ein Anheben des unteren Aufstandsbereichs des einen oder der mehreren Tiefenführungselemente über den unteren Aufstandsbereich der Rolle zu erlauben. Vorzugsweise weist die Aufhängung des einen oder der mehreren Tiefenführungselemente mehrere gelenkig miteinander verbundene Streben auf, welche das eine oder die mehreren Tiefenführungselemente mit einem Tragrahmen des Säaggregats verbinden und ein Verschwenken des einen oder der mehreren Tiefenführungselemente um eine im Wesentlichen horizontal und quer zur Fahrtrichtung verlaufende Schwenkachse ermöglichen. Wenn das Säaggregat zwei Tiefenführungselemente aufweist, ist die Rolle vorzugsweise zwischen den zwei Tiefenführungselementen angeordnet, wobei die Aufhängung der Tiefenführungselemente eine Pendelbewegung der Tiefenführungselemente um eine in einer vertikalen Ebene liegende und in Fahrtrichtung nach unten abfallende Pendelachse erlaubt. Alternativ oder zusätzlich kann die Aufhängung des einen oder der mehreren Tiefenführungselemente ein oder mehrere längenveränderliche Elemente, wie etwa Teleskopstreben oder Einstellzylinder aufweisen.

Eine andere Ausführungsform des erfindungsgemäßen Säaggregats weist eine Verstelleinrichtung auf, mittels welcher die Rollenaufhängung und/oder die Aufhängung des einen oder der mehreren Tiefenführungselemente verstellbar ist. Die Verstelleinrichtung kann manuell betätigbar sein. Ferner kann mittels der Verstelleinrichtung eine Schwenkbewegung der Rolle und/oder des einen oder der mehreren Tiefenführungselemente ausgeführt werden. Insbesondere ist der Zustand beziehungsweise die Stellung der Rolle und/oder des einen oder der mehreren Tiefenführungselemente über die Verstelleinrichtung für den Maschinenbediener ableitbar. Hierzu können beispielsweise Teile der Verstelleinrichtung von außen optisch für den Maschinenbediener wahrnehmbar sein.

Darüber hinaus ist ein erfindungsgemäßes Säaggregat bevorzugt, bei welchem mittels der Verstelleinrichtung ein oder mehrere Arbeitszustände des Säaggregats einstellbar sind, wobei der untere Aufstandsbereich des einen oder der mehreren Tiefenführungselemente in sämtlichen Arbeitszuständen oberhalb des unteren Aufstandsbereichs der Rolle positioniert ist. Insbesondere sind mehrere Arbeitszustände notwendig, damit die Saatgut-Ablagetiefe der Bodenbeschaffenheit und/oder dem auszubringenden Saatgut angepasst werden kann. Außerdem kann es notwendig sein, das Fang- und Einbettverhalten der Rolle durch die Einstellung eines geeigneten Arbeitszustands anzupassen.

In einer vorteilhaften Weiterbildung des erfindungsgemäßen Säaggregats sind mittels der Verstelleinrichtung ein oder mehrere Parkzustände des Säaggregats einstellbar, wobei der untere Aufstandsbereich des einen oder der mehreren Tiefenführungselemente in sämtlichen Parkzuständen unterhalb des unteren Aufstandsbereichs der Rolle positioniert ist. Bei einem ebenen Boden weist die Rolle in den unterschiedlichen Parkzuständen des Säaggregats unterschiedliche Abstände zum Boden auf. Beispielsweise kann der Bodenabstand erhöht werden, wenn sich auf dem Boden Flüssigkeit gebildet hat. Ferner kann eine Erhöhung des Bodenabstandes auch bei niedrigen Bodentemperaturen oder einem schneebedeckten Boden vorteilhaft sein. Durch die Einstellbarkeit unterschiedlicher Parkzustände kann das Säaggregat jedoch auf gekrümmten Oberflächen oder im Bereich von Hindernissen, wie Leisten oder Kabeln auf dem Boden einer Maschinenhalle, abgestellt werden, ohne dass die Hindernisse in Kontakt mit der Rolle kommen.

In einer anderen Ausführungsform des erfindungsgemäßen Säaggregats umfasst die Verstelleinrichtung einen manuell betätigbaren Verstellhebel. Insbesondere ist der Verstellhebel derart angeordnet, dass er von außen durch einen Maschinenbediener greifbar ist. Vorzugsweise weist der Verstellhebel eine oder mehrere Fingermulden auf, welche die Betätigung des Verstellhebels vereinfachen. Vorzugsweise ist der Verstellhebel schwenkbar gelagert, wobei das Ausführen einer Schwenkbewegung des Verstellhebels zu einer Relativbewegung des einen oder der mehreren Tiefenführungselemente und der Rolle führt. Ferner ist es bevorzugt, dass der Verstellhebel mehrere Rastpositionen aufweist, wobei jede Rastposition einem Arbeitszustand oder einem Parkzustand des Säaggregats zugeordnet ist. Vorzugsweise ist der Verstellhebel in einer Führung innerhalb des Tragrahmens des Säaggregats geführt, wobei den einzelnen Rastpositionen Ausnehmungen innerhalb des Tragrahmens des Säaggregats zugeordnet sein können, mit welchen ein oder mehrere Stifte des Verstellhebels in Eingriff bringbar sind.

Bevorzugt ist außerdem ein erfindungsgemäßes Säaggregat, bei welchem die Verstelleinrichtung einen oder mehrere Verstellaktuatoren umfasst. Die Steuerung der Verstellaktuatoren kann durch Bedienelemente an dem Säaggregat oder der Sämaschine erfolgen, beispielsweise durch Druckknöpfe oder Schalter. Ferner können die Verstellaktuatoren auch über eine Fernsteuerung, beispielsweise aus dem Führerhaus einer Zugmaschine, bedient werden.

In einer weiteren Ausführungsform des erfindungsgemäßen Säaggregats ist ein oder sind mehrere Verstellaktuatoren als elektrische, pneumatische oder hydraulische Aktuatoren ausgebildet. Ferner kann ein oder können mehrere Verstellaktuatoren als motorische Stellglieder ausgebildet sein.

Die der Erfindung zugrunde liegende Aufgabe wird ferner durch eine Sämaschine der eingangs genannten Art gelöst, wobei das eine oder die mehreren Säaggregate nach einer der vorstehend beschriebenen Ausführungsformen ausgebildet sind. Hinsichtlich der Vorteile und Modifikationen der erfindungsgemäßen Sämaschine wird auf die Vorteile und Modifikationen des erfindungsgemäßen Säaggregats verweisen.

Weitere Einzelheiten der Erfindung sind der Figurenbeschreibung und den Zeichnungen zu entnehmen. Es zeigen
- Fig. 1: ein Ausführungsbeispiel des erfindungsgemäßen Säaggregats in einer perspektivischen Darstellung;
- Fig. 2: das in der Fig. 1 dargestellte Säaggregat in einem Arbeitszustand in einer Seitenansicht;
- Fig. 3: das in der Fig. 1 dargestellte Säaggregat in einem Arbeitszustand mit ausgeblendetem Tiefenführungselement in einer Seitenansicht;
- Fig. 4: eine Detaildarstellung des in der Fig. 3 dargestellten Säaggregats;
- Fig. 5: das in der Fig. 1 dargestellte Säaggregat in einem Arbeitszustand mit ausgeblendetem Tiefenführungselement in einer perspektivischen Darstellung;
- Fig. 6: das in der Fig. 1 dargestellte Säaggregat in einem Parkzustand in einer Seitenansicht;
- Fig. 7: das in der Fig. 1 dargestellte Säaggregat in einem Parkzustand mit ausgeblendetem Tiefenführungselement in einer Seitenansicht;
- Fig. 8: eine Detaildarstellung des in der Fig. 7 dargestellten Säaggregats;
- Fig. 9: das in der Fig. 1 dargestellte Säaggregat in einem Parkzustand mit ausgeblendetem Tiefenführungselement in einer perspektivischen Darstellung;
- Fig. 10: Teile eines erfindungsgemäßen Säaggregats in einer perspektivischen Darstellung;
- Fig. 11: das Säaggregat nach Fig. 1 mit der hinter dem Säschar angeordneten Rolle zugeordneten Zustreichern in gleicher perspektivischer Darstellung;
- Fig. 12: das in der Fig. 11 dargestellte Säaggregat in einer Seitenansicht;
- Fig.13: Teile des Säaggregats nach Fig. 11 in einer perspektivischen Darstellung und
- Fig. 14: die Rolle mit den zugeordneten Abstreifern nach den Fig. 11 bis 13 in Draufsicht.

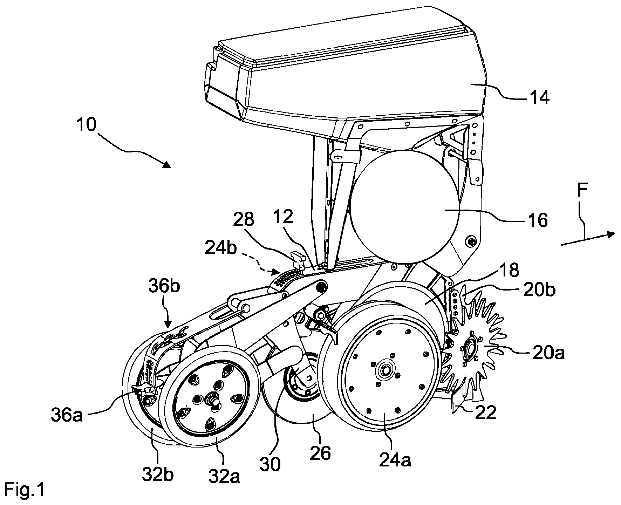

Die Fig. 1 zeigt ein Säaggregat 10 für eine Sämaschine. Das Säaggregat 10 weist einen Tragrahmen 12 auf, an welchem ein Vorratsbehälter 14 zur Bevorratung von Saatgut angeordnet ist.

Das Saatgut in dem Vorratsbehälter 14 wird einer Kornvereinzelungseinrichtung 16 zugeleitet, welche zur Vereinzelung der Saatgutkörner aus dem Vorratsbehälter 14 dient. Die Kornvereinzelungseinrichtung 16 kann beispielsweise nach dem Prinzip der Überdruck-Vereinzelung oder nach dem Prinzip der Saugluftvereinzelung arbeiten.

Die vereinzelten Saatgutkörner werden dann einem Säschar 18 zugeleitet, wobei das Säschar 18 dazu eingerichtet ist, das Saatgut in eine Saatfurche abzugeben. Das Säschar 18 kann eine oder mehrere Schneidscheiben aufweisen und ist vorzugsweise als Doppelscheiben-Säschar ausgebildet. In Fahrtrichtung F vor dem Säschar 18 sind zwei V-förmig angestellte Sternräumer 20a, 20b und ein Klutenräumer 22 angeordnet. Die Sternräumer 20a, 20b dienen zum Abtransport von organischem Material aus der Saatfurche. Der Klutenräumer 22 schiebt zusätzlich trockenen Boden und Schollen von der Saatfurche weg.

Das Säschar 18 ist zwischen zwei Tiefenführungselementen 24a, 24b angeordnet, wobei die Tiefenführungselemente 24a, 24b zum Einstellen der Saatgut-Ablagetiefe des Säschars 18 dienen. Die Tiefenführungselemente 24a, 24b sind als Tiefenführungsräder ausgebildet. Alternativ können die Tiefenführungselemente 24a, 24b jedoch auch als Bandlaufwerke oder Tiefenführungskufen ausgebildet sein.

Hinter dem Säschar 18 ist eine Rolle 26 angeordnet, welche an einer Rollenaufhängung 30 befestigt und dazu eingerichtet ist, das von dem Säschar 18 abgegebene Saatgut abzufangen und einzubetten. Die Rolle 26 ist üblicherweise elastisch verformbar ausgebildet und kann, abhängig von dem Aggregatsbeziehungsweise Sämaschinentyp als Fangrolle und Andruckrolle ausgebildet sein.

Oberhalb der Rolle 26 ist ein manuell betätigbarer Verstellhebel 28 angeordnet, mittels welchem die Tiefenführungselemente 24a, 24b verstellbar sind. Die Verstellung der Tiefenführungselemente 24a, 24b kann derart erfolgen, dass der untere Aufstandsbereich der Tiefenführungselemente 24a, 24b oberhalb und unterhalb des unteren Aufstandsbereichs der Rolle 26 positioniert ist.

Der Verstellhebel 28 weist zwei Fingermulden auf, welche die Betätigung des Verstellhebels 28 vereinfachen. Darüber hinaus weist der Verstellhebel 28 mehrere Rastpositionen auf, wobei jede Rastposition einem Arbeitszustand oder einem Parkzustand des Säaggregats 10 zugeordnet ist. Der Verstellhebel 28 ist in einer Führung innerhalb des Tragrahmens 12 des Säaggregats 10 geführt, wobei den einzelnen Rastpositionen Ausnehmungen innerhalb des Tragrahmens 12 des Säaggregats 10 zugeordnet sind, mit welchen Stifte des Verstellhebels 28 in Eingriff bringbar sind.

Alternativ oder zusätzlich zu dem manuell betätigbaren Verstellhebel 28 kann ein oder können mehrere Verstellaktuatoren vorhanden sein, welche beispielsweise als elektrische, pneumatische oder hydraulische Aktuatoren ausgebildet sind und zum Verstellen der Tiefenführungselemente 24a, 24b dienen.

Hinter der Rolle 26 sind zwei V-förmig ausgerichtete Andruckrollen 32a, 32b angeordnet, welche zum Bedecken der Saatfurche mit Boden und zum Andrücken des Bodens über der zugedeckten Saatfurche dienen. Über die Verstelleinrichtungen 36a, 36b ist der Anstellwinkel der Andruckrollen 32a, 32b und der von den Andruckrollen 32a, 32b auf den Boden ausgeübte Druck einstellbar.

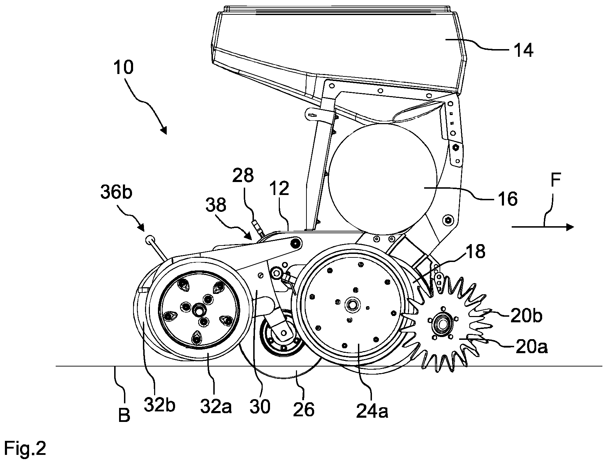

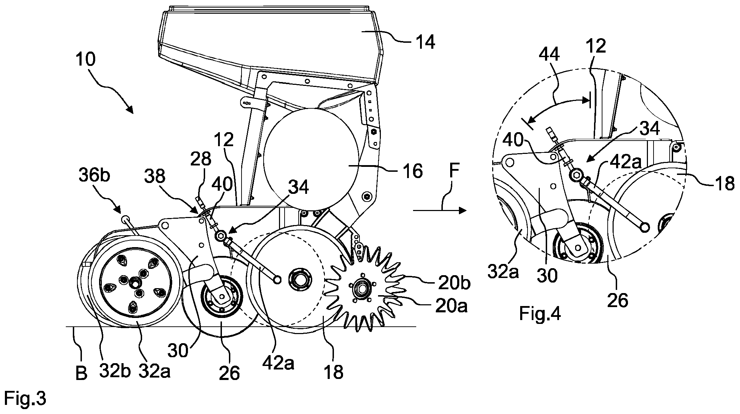

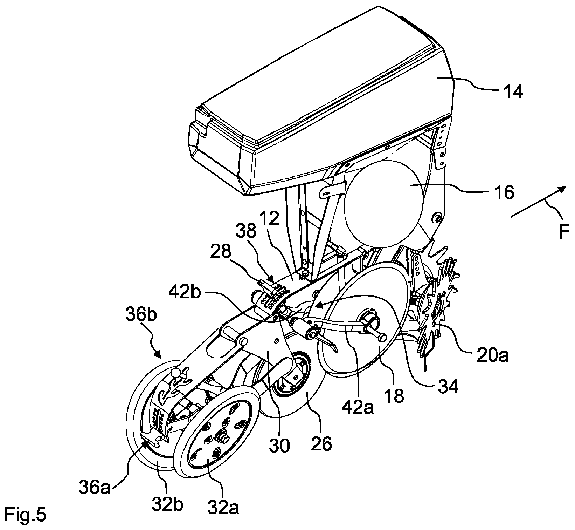

Die Fig. 2 bis 5 zeigen das in der Fig. 1 dargestellte Säaggregat 10 in einem Arbeitszustand, in welchem der untere Aufstandsbereich der Tiefenführungselemente 24a, 24b oberhalb des unteren Aufstandsbereichs der Rolle 26 positioniert ist. Zum Einstellen des dargestellten Arbeitszustands des Säaggregats 10 dient eine Verstelleinrichtung 38, welche auch den manuell betätigbaren Verstellhebel 28 umfasst. Durch ein Verschwenken des Verstellhebels 28 der Verstelleinrichtung 38 innerhalb des Verstellbereichs 44 ist eine Aufhängung 34 der Tiefenführungselemente 24a, 24b verstellbar.

Die Aufhängung 34 der Tiefenführungselemente 24a, 24b weist eine mit dem Verstellhebel 28 verbundene Strebe 40 auf, welche gelenkig mit den Streben 42a, 42b gekoppelt ist. An den Streben 42a, 42b sind die Tiefenführungselemente 24a, 24b befestigt. Die Aufhängung 34 der Tiefenführungselemente 24a, 24b ist dazu eingerichtet, ein Absenken des unteren Aufstandsbereichs der Tiefenführungselemente 24a, 24b unter den unteren Aufstandsbereich der Rolle 26 und ein Anheben des unteren Aufstandsbereichs der Tiefenführungselemente 24a, 24b über den unteren Aufstandsbereich der Rolle 26 zu erlauben.

Bei einem weichen Boden B, wie beispielsweise einem einzusäenden Ackerboden, setzt der untere Aufstandsbereich der Tiefenführungselemente 24a, 24b in dem dargestellten Arbeitszustand des Säaggregats 10 auf den Boden B auf und stützt das Säaggregat 10 somit gegenüber dem Boden B ab. Der untere Aufstandsbereich der Rolle 26 ist unterhalb der Bodenebene, auf welcher der untere Aufstandsbereich der Tiefenführungselemente 24a, 24b aufsetzt, und unterhalb der unteren Kante des Säschars 18 angeordnet. Somit kann die Rolle 26 das von dem Säschar 18 abgegebene Saatgut abfangen und einbetten.

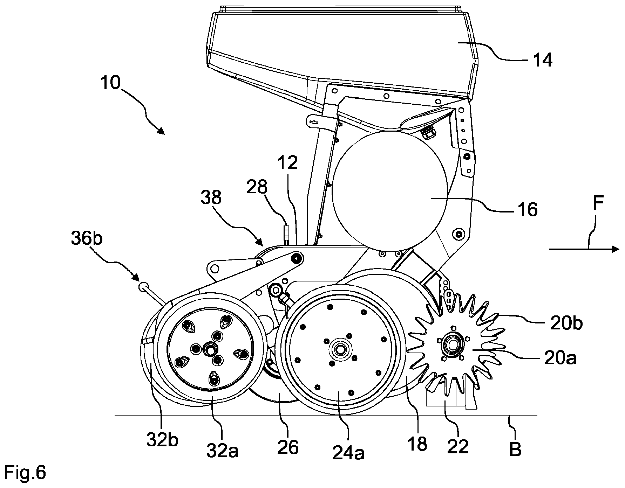

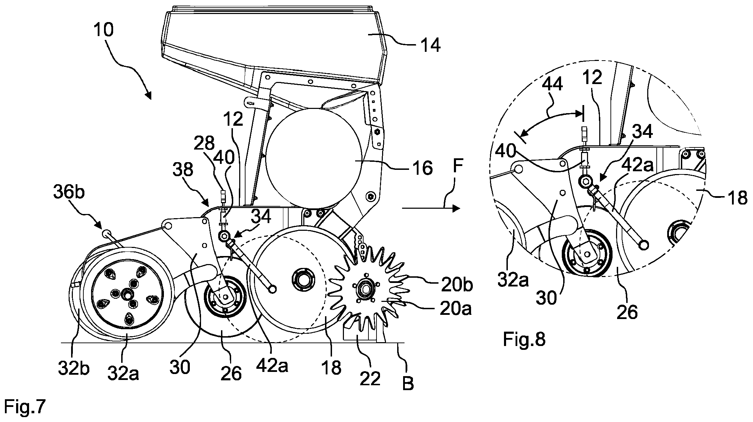

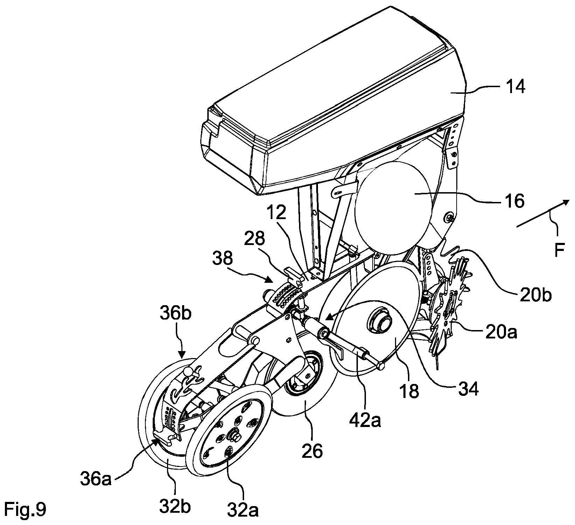

Die Fig. 6 bis 9 zeigen das in der Fig. 1 dargestellte Säaggregat 10 in einem Parkzustand, in welchem der untere Aufstandsbereich der Tiefenführungselemente 24a, 24b unterhalb des unteren Aufstandsbereichs der Rolle 26 positioniert ist.

Bei einem harten Boden B, wie beispielsweise einem Betonboden einer Maschinenhalle, setzt der untere Aufstandsbereich der Tiefenführungselemente 24a, 24b in dem dargestellten Parkzustand des Säaggregats 10 auf den Boden B auf und stützt das Säaggregat 10 somit gegenüber dem Boden B ab. Dadurch, dass der untere Aufstandsbereich der Tiefenführungselemente 24a, 24b unterhalb des unteren Aufstandsbereichs der Rolle 26 positioniert ist, wird eine Bodenberührung der Rolle 26 beim Abstellen vermieden. Einer Verformung und somit einer Beschädigung der Rolle 26 in der Parkposition wird auf diese Weise vorgebeugt.

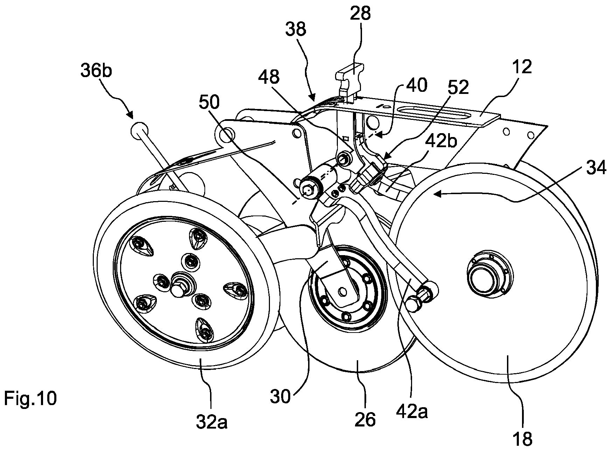

Die Fig. 10 zeigt, dass der Verstellhebel 28 und die mit dem Verstellhebel 28 verbundene Strebe 40 um eine Schwenkachse 48 verschwenkt werden können. Die Strebe 40 ist über ein Koppelglied 52 mit den Streben 42a, 42b verbunden, an welchen die Tiefenführungselemente (ausgeblendet) befestigt sind. Das Koppelglied 52 erzeugt einen Versatz, sodass die Streben 42a, 42b um eine Schwenkachse 50 verschwenkt werden können, wobei die Schwenkachse 50 beabstandet von und parallel zu der Schwenkachse 48 angeordnet ist. Das Verschwenken des Verstellhebels 28 um die Schwenkachse 48 führt somit zu einem Verschwenken der Streben 42a, 42b und der Tiefenführungselemente um die Schwenkachse 50.

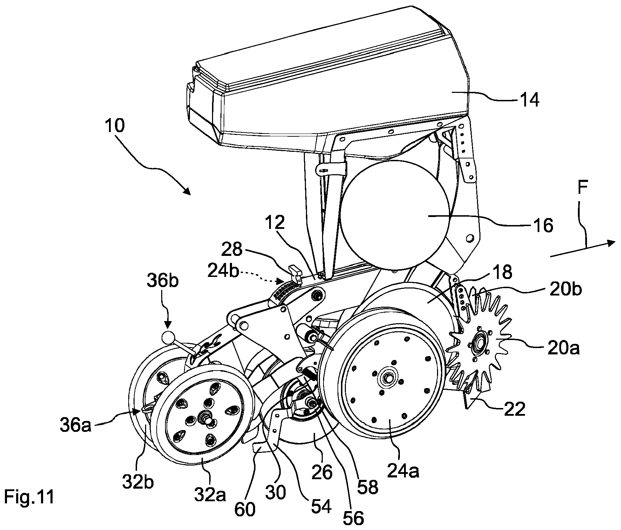

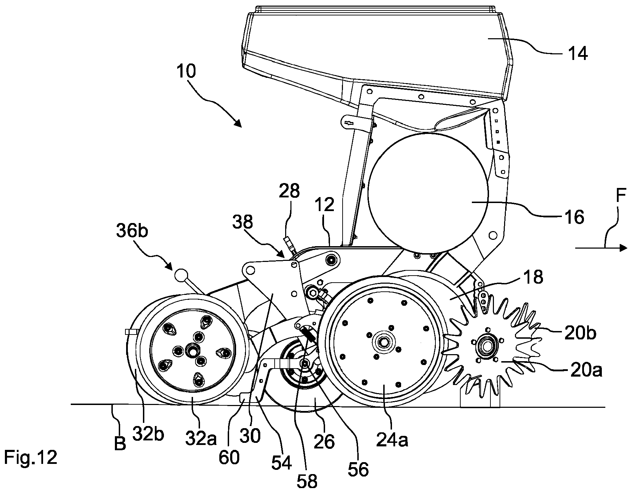

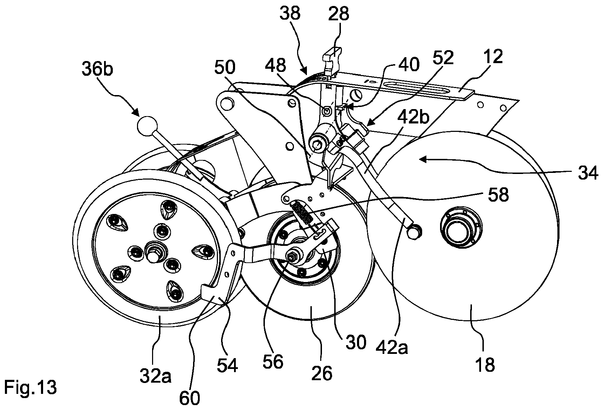

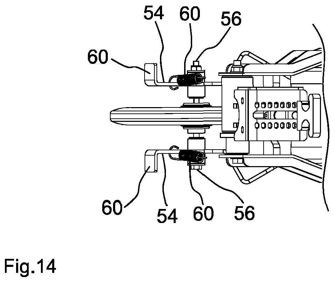

Bei dem Säaggregat 10 nach den Fig. 11 bis 14 sind der Rolle 26 hinter dem Säschar 18 Zustreicherelemente 54 zugeordnet. Diese Zustreicherelemente 54. Die Zustreicherlemente sind auf der Welle 56 um eine quer zur Fahrtrichtung verlaufenden Schwenkachse verschwenkbar gelagert. Auf dieser Welle 56 ist auch die Rolle 26 mittels Drehlager freidrehbar gelagert. Somit sind die Zustreichereöemente 56 auf der gleichen Welle 56 wie die drehbar angeordnete Rolle 26 verschwenkbar angeordnet. Die Zustreicherelemente 56 ragen über die Welle 56 entgegengesetzt zum Boden hinaus. An diesen hinausragenden Enden der Zustreicherelemente 54 greifen Zugfedern 58 an, mittels denen die nach innen abgebogenen Zustereicheenden 60 federnd gegen den Boden gedrückt werden. Die Zustereicherenden 60 fördern Boden in die Säfurche, so dass die in der Säfurche abgelegten Samenkörner mit Boden bedeckt werden. Dieser Boden wird anschließend von den Andruckrollen 32a, 32b angedrückt.

### Bezugszeichenliste

- 10: Säaggregat
- 12: Tragrahmen
- 14: Vorratsbehälter
- 16: Kornvereinzelungseinrichtung
- 18: Säschar
- 20a, 20b: Sternräumer
- 22: Klutenräumer
- 24a, 24b: Tiefenführungselemente
- 26: Rolle
- 28: Verstellhebel
- 30: Rollenaufhängung
- 32a, 32b: Andruckrollen
- 34: Aufhängung
- 36a, 36b: Verstelleinrichtungen
- 38: Verstelleinrichtung
- 40: Strebe
- 42a, 42b: Streben
- 44: Verstellbereich
- 46: Verbindungsglied
- 48: Schwenkachse
- 50: Schwenkachse
- 52: Koppelglied
- 54: Zustreichelemente
- 56: Welle
- 58: Zugfedern
- 60: Zustreichenden

- F: Fahrtrichtung
- B: Boden

## Patentansprüche

1. Säaggregat (10) für eine Sämaschine, mit
- einem Säschar (18) zur Abgabe von Saatgut,
- einem oder mehreren Tiefenführungselementen (24a, 24b) zum Einstellen der Saatgut-Ablagetiefe des Säschars (18); und
- einer Rolle (26) zum Abfangen und Einbetten des von dem Säschar (18) abgegebenen Saatguts;
wobei das eine oder die mehreren Tiefenführungselemente (24a, 24b) und die Rolle (26) derart relativ zueinander bewegbar sind, dass der untere Aufstandsbereich des einen oder der mehreren Tiefenführungselemente (24a, 24b) oberhalb und unterhalb des unteren Aufstandsbereichs der Rolle (26) positionierbar ist, **dadurch gekennzeichnet, dass** das eine oder die mehreren Tiefenführungselemente (24a, 24b) an einer Aufhängung (34) befestigt sind, wobei die Aufhängung (34) dazu eingerichtet ist, ein Absenken des unteren Aufstandsbereichs des einen oder der mehreren Tiefenführungselemente (24a, 24b) unter den unteren Aufstandsbereich der Rolle (26) und/oder ein Anheben des unteren Aufstandsbereichs des einen oder der mehreren Tiefenführungselemente (24a, 24b) über den unteren Aufstandsbereich der Rolle (26) zu erlauben.

2. Säaggregat (10) nach Anspruch 1,
**dadurch gekennzeichnet, dass** die Rolle (26) an einer Rollenaufhängung (30) befestigt ist, wobei die Rollenaufhängung (30) dazu eingerichtet ist, ein Absenken des unteren Aufstandsbereichs der Rolle (26) unter den unteren Aufstandsbereich des einen oder der mehreren Tiefenführungselemente (24a, 24b) und/oder ein Anheben des unteren Aufstandsbereichs der Rolle (26) über den unteren Aufstandsbereich des einen oder der mehreren Tiefenführungselemente (24a, 24b) zu erlauben.

3. Säaggregat (10) nach Anspruch 2
**gekennzeichnet durch** eine Verstelleinrichtung (38), mittels welcher die Rollenaufhängung (30) und/oder die Aufhängung (34) des einen oder der mehreren Tiefenführungselemente (24a, 24b) verstellbar ist.

4. Säaggregat (10) nach Anspruch 3,
**dadurch gekennzeichnet, dass** mittels der Verstelleinrichtung (38) ein oder mehrere Arbeitszustände des Säaggregats (10) einstellbar sind, wobei der untere Aufstandsbereich des einen oder der mehreren Tiefenführungselemente (24a, 24b) in sämtlichen Arbeitszuständen oberhalb des unteren Aufstandsbereichs der Rolle (26) positioniert ist.

5. Säaggregat (10) nach Anspruch 3 oder 4,
**dadurch gekennzeichnet, dass** mittels der Verstelleinrichtung (38) ein oder mehrere Parkzustände des Säaggregats (10) einstellbar sind, wobei der untere Aufstandsbereich des einen oder der mehreren Tiefenführungselemente (24a, 24b) in sämtlichen Parkzuständen unterhalb des unteren Aufstandsbereichs der Rolle (26) positioniert ist.

6. Säaggregat (10) nach einem der Ansprüche 3 bis 5,
**dadurch gekennzeichnet, dass** die Verstelleinrichtung (38) einen manuell betätigbaren Verstellhebel (28) umfasst.

7. Säaggregat (10) nach einem der Ansprüche 3 bis 6,
**dadurch gekennzeichnet, dass** die Verstelleinrichtung (38) einen oder mehrere Verstellaktuatoren umfasst.

8. Säaggregat (10) nach Anspruch 7,
**dadurch gekennzeichnet, dass** ein oder mehrere Verstellaktuatoren als elektrische, pneumatische oder hydraulische Aktuatoren ausgebildet sind.

9. Sämaschine, mit
- einem oder mehreren Säaggregaten (10),
**dadurch gekennzeichnet, dass** das eine oder die mehreren Säaggregate (10) nach einem der vorstehenden Ansprüche ausgebildet sind.

## Claims

1. Sowing unit (10) for a seeder, with
- a sowing coulter (18) for discharging seed,
- one or more depth-control elements (24a, 24b) for setting the seed-depositing depth of the sowing coulter (18); and
- a roller (26) for catching and embedding the seed discharged by the sowing coulter (18); wherein the one or more depth-control elements (24a, 24b) and the roller (26) are movable relative to one another in such a manner that the lower contact region of the one or more depth-control elements (24a, 24b) can be positioned above and below the lower contact region of the roller (26), **characterized in that** the one or more depth-control elements (24a, 24b) are fastened to a suspension (34), wherein the suspension (34) is configured to permit a lowering of the lower contact region of the one or more depth-control elements (24a, 24b) below the lower contact region of the roller (26) and/or a raising of the lower contact region of the one or more depth-control elements (24a, 24b) above the lower contact region of the roller (26).

2. Sowing unit (10) according to Claim 1, **characterized in that** the roller (26) is fastened to a roller suspension (30), wherein the roller suspension (30) is configured to permit a lowering of the lower contact region of the roller (26) below the lower contact region of the one or more depth-control elements (24a, 24b) and/or a raising of the lower contact region of the roller (26) above the lower contact region of the one or more depth-control elements (24a, 24b).

3. Sowing unit (10) according to Claim 2, **characterized by** an adjustment device (38) by means of which the roller suspension (30) and/or the suspension (34) of the one or more depth-control elements (24a, 24b) are/is adjustable.

4. Sowing unit (10) according to Claim 3, **characterized in that** one or more operating states of the sowing unit (10) can be set by means of the adjustment device (38), wherein the lower contact region of the one or more depth-control elements (24a, 24b) is positioned above the lower contact region of the roller (26) in all of the operating states.

5. Sowing unit (10) according to Claim 3 or 4, **characterized in that** one or more parking states of the sowing unit (10) can be set by means of the adjustment device (38), wherein the lower contact region of the one or more depth-control elements (24a, 24b) is positioned below the lower contact region of the roller (26) in all of the parking states.

6. Sowing unit (10) according to one of Claims 3 to 5, **characterized in that** the adjustment device (38) comprises a manually actuable adjustment lever (28).

7. Sowing unit (10) according to one of Claims 3 to 6, **characterized in that** the adjustment device (38) comprises one or more adjustment actuators.

8. Sowing unit (10) according to Claim 7, **characterized in that** one or more adjustment actuators are designed as electric, pneumatic or hydraulic actuators.

9. Seeder, with
- one or more sowing units (10),
**characterized in that** the one or more sowing units (10) are designed according to one of the preceding claims.

## Revendications

1. Appareil semeur (10) pour un semoir, comprenant
- un soc de semoir (18) pour distribuer la semence,
- un ou plusieurs éléments de guidage en profondeur (24a, 24b) pour l'ajustement de la profondeur de dépose de la semence du soc de semoir (18) ; et
- un rouleau (26) pour recueillir et intégrer la semence distribuée par le soc de semoir (18) ;
le ou les éléments de guidage en profondeur (24a, 24b) et le rouleau (26) pouvant être déplacés les uns par rapport aux autres de telle sorte que la région d'appui inférieure du ou des éléments de guidage en profondeur (24a, 24b) puisse être positionnée au-dessus et en dessous de la région d'appui inférieure du rouleau (26), **caractérisé en ce que** le ou les éléments de guidage en profondeur (24a, 24b) sont fixés à un système d'accrochage (34), le système d'accrochage (34) étant prévu pour permettre un abaissement de la région d'appui inférieure du ou des éléments de guidage en profondeur (24a, 24b) sous la région d'appui inférieure du rouleau (26) et/ou un soulèvement de la région d'appui inférieure du ou des éléments de guidage en profondeur (24a, 24b) au-dessus de la région d'appui inférieure du rouleau (26).

2. Appareil semeur (10) selon la revendication 1, **caractérisé en ce que** le rouleau (26) est fixé à un système d'accrochage de rouleau (30), le système d'accrochage de rouleau (30) étant prévu pour permettre un abaissement de la région d'appui inférieure du rouleau (26) sous la région d'appui inférieure du ou des éléments de guidage en profondeur (24a, 24b) et/ou un soulèvement de la région d'appui inférieure du rouleau (26) au-dessus de la région d'appui inférieure du ou des éléments de guidage en profondeur (24a, 24b).

3. Appareil semeur (10) selon la revendication 2,
**caractérisé par** un dispositif de réglage (38) au moyen duquel le système d'accrochage de rouleau (30) et/ou le système d'accrochage (34) du ou des éléments de guidage en profondeur (24a, 24b) peut être réglé.

4. Appareil semeur (10) selon la revendication 3,
**caractérisé en ce qu'**au moyen du dispositif de réglage (38), un ou plusieurs états de travail de l'appareil semeur (10) peuvent être ajustés, la région d'appui inférieure du ou des éléments de guidage en profondeur (24a, 24b) étant positionnée dans tous les états de travail au-dessus de la région d'appui inférieure du rouleau (26).

5. Appareil semeur (10) selon la revendication 3 ou 4,
**caractérisé en ce qu'**au moyen du dispositif de réglage (38), un ou plusieurs états de stationnement de l'appareil semeur (10) peuvent être ajustés, la région d'appui inférieure du ou des éléments de guidage en profondeur (24a, 24b) étant positionnée dans tous les états de stationnement en dessous de la région d'appui inférieure du rouleau (26).

6. Appareil semeur (10) selon l'une quelconque des revendications 3 à 5,
**caractérisé en ce que** le dispositif de réglage (38) comprend un levier de réglage (28) pouvant être commandé manuellement.

7. Appareil semeur (10) selon l'une quelconque des revendications 3 à 6,
**caractérisé en ce que** le dispositif de réglage (38) comprend un ou plusieurs actionneurs de réglage.

8. Appareil semeur (10) selon la revendication 7,
**caractérisé en ce qu'**un ou plusieurs actionneurs de réglage sont réalisés sous forme d'actionneurs électriques, pneumatiques ou hydrauliques.

9. Semoir, comprenant
- un ou plusieurs appareils semeurs (10), **caractérisé en ce que** le ou les appareils semeurs (10) sont réalisés selon l'une quelconque des revendications précédentes.
